# EUROPÄISCHE PATENTSCHRIFT

(11) **EP 2 199 589 B1**
(45) Veröffentlichungstag und Bekanntmachung des Hinweises auf die Patenterteilung: **20.09.2017**
(21) Anmeldenummer: 09177334.1
(22) Anmeldetag: 27.11.2009
(51) Int. Cl.: B01D 36/00, F02M 37/00, F02M 37/16, F02M 37/22, F04B 9/14, F04B 53/20, F04B 53/22

(54) **Kraftstofffilter**
Fuel filter
Filtre à carburant

(30) Priorität: 16.12.2008 DE 102008062552
(43) Veröffentlichungstag der Anmeldung: 23.06.2010
(73) Patentinhaber: Mahle International GmbH, 70376 Stuttgart (DE)
(72) Erfinder: Braunheim, Michael, 73033, Göppingen (DE); Koball, Michael, 70565, Stuttgart (DE); Lika, Torsten, 70197, Stuttgart (DE)
(74) Vertreter: BRP Renaud & Partner mbB Rechtsanwälte Patentanwälte Steuerberater

(56) Entgegenhaltungen:
- WO-A1-86/00241
- CH-A- 453 795
- DE-A1- 2 628 985
- FR-A1- 2 834 007
- GB-A- 1 157 187
- US-A- 4 502 956
- US-A- 4 515 690
- US-A- 4 539 108
- US-A1- 2001 030 148

## Beschreibung

Die vorliegende Erfindung betrifft einen Kraftstofffilter für einen Verbrennungsmotor einen Kraftfahrzeuges.

Kraftstofffilter, insbesondere Kraftstofffilter für Nutzfahrzeuge, weisen oftmals eine manuell zu betätigende Pumpe auf, mit Hilfe welcher Luft aus dem Kraftstofffilter ab und Kraftstoff angesaugt werden kann. Dies ist insbesondere bei manchen Motorvarianten beim Austausch des Kraftstofffilters erforderlich, um beispielsweise nach dem Einsetzen eines neuen Kraftstofffilters einen luftlosen Kraftstofffluss zum Verbrennungsmotor gewährleisten zu können. Derartige manuell zu betätigende Pumpen sind dabei üblicherweise konstruktiv aufwändig extern an einem Filtergehäuse des Kraftstofffilters angeordnet und erfordern deshalb einen nicht zu unterschätzenden zusätzlichen Bauraumbedarf.

Ein solcher Kraftstofffilter ist aus der WO 86/00241 A1 bekannt.

Aus der DE 26 28 985 A1 ist eine Zylinderpumpe bekannt, die zum Fördern heißer Flüssigkeiten zum Einsatz kommt.

Die vorliegende Erfindung beschäftigt sich mit dem Problem, für ein Kraftstofffilter eine verbesserte Ausführungsform anzugeben, welche insbesondere kompakter baut.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, eine Pumpe zur Luftabsaugung in einem Kraftstofffilter in einer Aufnahme eines Filtergehäusedeckels anzuordnen und dadurch platzsparend unterzubringen. Der Filtergehäusedeckel gehört dabei zu einem diesen und einen Filtergehäusetopf umfassenden Filtergehäuse eines Kraftstofffilters für einen Verbrennungsmotor eines Kraftfahrzeuges. Durch das Vorsehen einer die mit einer Reinseite des Kraftstofffilters verbundene Pumpe aufnehmenden Aufnahme im Filtergehäusedeckel des Kraftstofffilters, kann die Pumpe dort äußerst platzsparend angeordnet werden, wodurch ein insgesamt kompakt bauendes Kraftstofffilter realisiert werden kann. Aufgrund der Kopplung der Pumpe, welche als Hubkolbenpumpe ausgebildet ist, mit der Reinseite des Kraftstofffilters ist diese ziehend ausgebildet, das heißt sie saugt ein sich im Kraftstofffilter befindliches Luftvolumen aus diesem heraus und dadurch gereinigten Kraftstoff an. Generell ist dabei die Aufnahme für die Pumpe im Filtergehäusedeckel derart ausgebildet, dass in diese beispielsweise auch eine Heizeinrichtung eingebaut werden kann oder aber dass diese, beispielsweise mittels eines Blindstopfens, komplett verschlossen werden kann. Die Aufnahme sowie die zugehörigen Elemente, wie beispielsweise die Pumpe, die Heizeinrichtung oder der Blindstopfen, sind somit derart aufeinander abgestimmt, dass der Filtergehäusedeckel auf einfachste Weise an die jeweiligen Anforderungen angepasst bzw. mit einer entsprechend erforderlichen Einrichtung versehen werden kann. Selbstverständlich ist dabei auch denkbar, dass die Heizeinrichtung zum Aufheizen des Kraftstoffs in einer weiteren Aufnahme angeordnet werden kann, welche separat zur Aufnahme der Pumpe angeordnet ist. Durch einen üblicherweise aus Kunststoff und insbesondere als Kunststoffspritzgussteil ausgebildeten Filtergehäusedeckel, lässt sich die Aufnahme darüber hinaus einerseits kostengünstig und andererseits in nahezu beliebiger Ausführungsform realisieren, wodurch weitere, insbesondere monetäre, Vorteile erzielt werden können.

Bei einer weiteren vorteilhaften Ausführungsform der erfindungsgemäßen Lösung, ist die Aufnahme zentral am Filtergehäusedeckel angeordnet. Die zentrale Anordnung der Aufnahme ermöglicht ein Einstecken der Pumpe in einen Innenraum eines Ringfilterelementes, welches in Radialrichtung von außen nach innen durchströmt ist, so dass der Innenraum die Reinseite des Kraftstofffilters darstellt. Durch die Axialerstreckung des Reinraums im Ringfilterelement kann ein erforderlicher Kolbenhub der als Hubkolbenpumpe ausgebildeten Pumpe zum Absaugen der in diesem Reinraum befindlichen Luft problemlos erfolgen, wobei diese Anordnung darüber hinaus eine besonders kompakte Bauweise des Kraftstofffilters ermöglicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein erfindungsgemäßes Kraftstofffilter mit einer in einem Filtergehäusedeckel angeordneten und manuell zu bedienenden Hubkolbenpumpe,
- Fig. 2: eine Detaildarstellung der Fig. 1,
- Fig. 3: ebenfalls eine Detaildarstellung der Fig. 1, jedoch aus einer anderen Perspektive,
- Fig. 4: Detaildarstellung der Handpumpe aus Fig. 3.

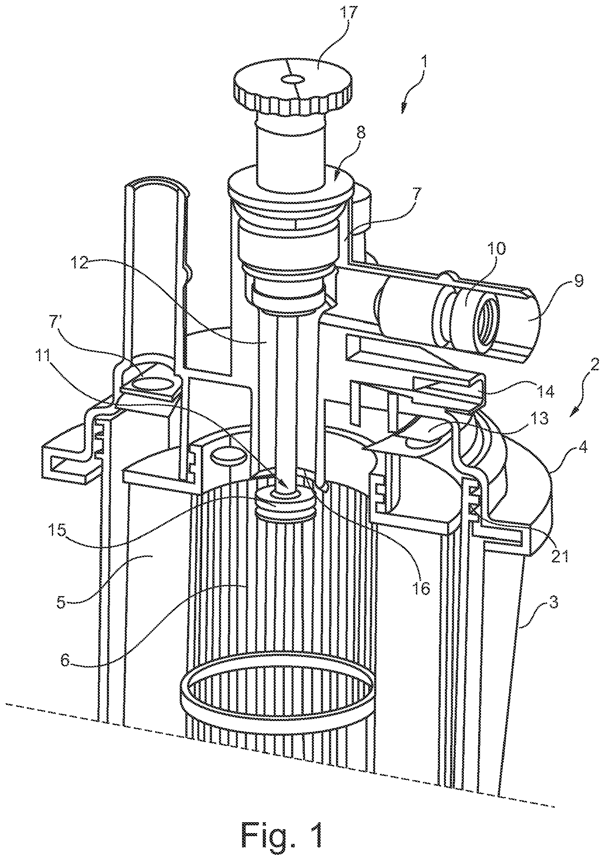

Entsprechend der Fig. 1, weist ein erfindungsgemäßes Kraftstofffilter 1 für einen nicht gezeigten Verbrennungsmotor eines Kraftfahrzeuges ein Filtergehäuse 2 auf, welches im Wesentlichen aus einem Filtergehäusetopf 3 und einem damit arretierbaren bzw. verschraubbaren Filtergehäusedeckel 4 besteht. Im Filtergehäuse 2 ist dabei ein radial durchströmtes Ringfilterelement 5 angeordnet, wobei dieses von außen nach innen radial durchströmt ist, so dass ein Innenraum 6 des Ringfilterelementes 5 einem Reinraum entspricht. Erfindungsgemäß ist nun im Filtergehäusedeckel 4 eine Aufnahme 7 vorgesehen, in welcher eine ziehend fördernde und mit der Reinseite, das heißt mit dem Innenraum 6, des Kraftstofffilters 1 verbundene Pumpe 8 angeordnet ist. Die Pumpe 8 ist dabei gemäß den in den gezeigten Ausführungsformen als manuelle Hubkolbenpumpe ausgebildet, alternativ kann die Pumpe 8 aber auch elektrisch angetrieben werden. Durch die Integration der Aufnahme 7 in den Filtergehäusedeckel 4 und die Anordnung der Pumpe 8 in der Aufnahme 7, kann eine besonders kompakte Bauweise des Kraftstofffilters 1 erreicht werden, wodurch dessen Bauraumbedarf insgesamt gesenkt werden kann.

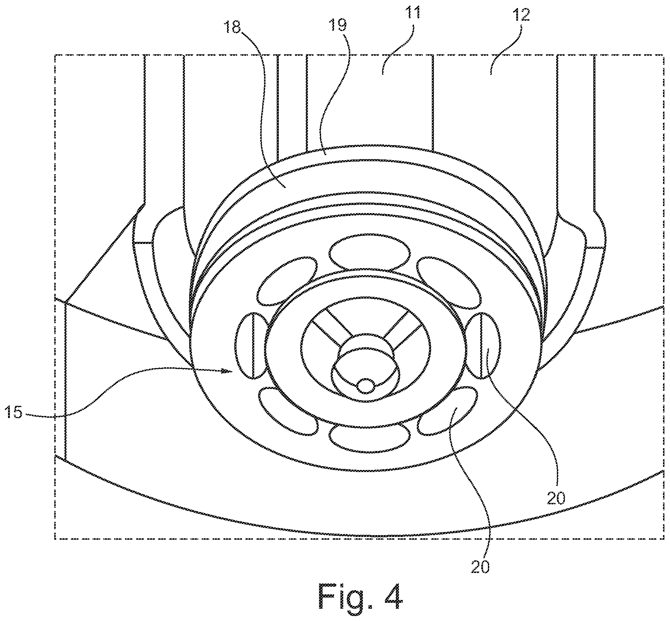

Wie der Fig. 1 weiter zu entnehmen ist, ist dabei in einem Ablauf 9 des Kraftstofffilters 1 ein Rückschlagventil 10 angeordnet, welches im Zusammenspiel mit der Pumpe 8 die Förderung von im Innenraum 6 befindlicher Luft oder Kraftstoff ermöglicht. Betrachtet man die Fig. 1 - 3, so kann man erkennen, dass die Pumpe 8 in diesen Fällen als Hubkolbenpumpe ausgebildet ist, bei welcher ein Kolbenteller 15 an einer Kolbenstange 11 in einem Zylinder 12 zur Förderung von Luft auf und ab bewegt wird. Zu den Details des Kolbentellers 15 siehe Fig. 4.

Die Aufnahme 7 ist bei allen gezeigten Ausführungsformen zentral am Filtergehäusedeckel 4 angeordnet und nimmt dabei die Pumpe 8 stets so auf, dass diese platzsparend in den Innenraum 6 eingreifen oder in diesem angeordnet ist. Gemäß den Fig. 1 - 3 ist dabei die Pumpe 8 manuell betätigbar.

Im Filtergehäusedeckel 4 kann darüber hinaus eine weitere Aufnahme 7' vorgesehen sein, in welcher eine Heizeinrichtung 13 angeordnet ist. Die Heizeinrichtung 13 kann dabei über einen Steckkontakt 14 mit einer nicht gezeigten elektrischen Energiequelle verbunden werden, wobei über diesen Steckkontakt 14 bei Bedarf auch eine elektrisch angetriebene Pumpe mit elektrischer Energie versorgt werden kann. Es ist am Filtergehäusedeckel 4 auch ein Drucksensor vorgesehen. Direkt am Einlauf des Kraftstoffes befindet sich die Heizeinrichtung.

Die in den Fig. 1 bis 3 dargestellte Pumpe 8 befindet sich in ihrer Nichtgebrauchsstellung, in welcher ein normaler Betrieb des Kraftstofffilters 1 gewährleistet ist. Der gereinigte Kraftstoff verlässt dabei das Filtergehäuse 2 durch den Ablauf 9. In der Nichtgebrauchsstellung ist der Kolbenteller 15 der Pumpe 8 derart angeordnet, dass er den Zylinder 12 nicht verschließt, sondern vielmehr einen Kraftstoffabfluss durch diesen ermöglicht. Der Kolbenteller 15 hängt an der eingefahrenen Kolbenstange 11 unterhalb einer Öffnung 16 des Zylinders 12. Um die Pumpe 8 nach Wechsel des Filterelementes 5 zum Abpumpen der Luft aus dem Kraftstofffilter 1 in Gang zu setzen, muss erst durch Entrasten eines Handrades 17 der Kolbenteller 15 in den Zylinder 12 hinein gezogen werden. Erst dann kann eine Dichtung 18 an der Innenwand des Zylinders 12 ihre Dichtwirkung entfalten und die Pumpe 8 pumpen. Hierzu wird das Handrad 17 auf und ab bewegt, wodurch mittels der Kolbenstange 11 der Kolbenteller 15 im Zylinder 12 auf und ab bewegt wird. Die Dichtung 18 ist eine typische O-Ringdichtung, die um den Kolbenteller 15 umläuft, bzw. dort in einer Nut gehalten wird. Der Kolbenteller 15 befindet sich am unteren Ende der Kolbenstange 11 und ist mit dieser mittels geeigneter Befestigungsmittel fest verbunden. Die Dichtung 18 muss sehr fest am Kolbenteller 15 anliegen, da sie im normalen Betrieb des Kraftfahrzeugs nicht herunterfallen darf.

Durch die Einwegventilfunktion einer Dichtmembran 19, bzw. Dichtlippe, die oben auf dem Kolbenteller 15 mit seinen Öffnungen 20 aufliegt und am Kolbenteller 15 befestigt ist, kann beim Hinunterdrücken des Kolbentellers 15 Luft in den rohrförmigen Raum des Zylinders 12 eindringen. Beim Hochziehen des Handrades 17 wird der Kolbenteller 15 mittels der Kolbenstange 11 nach oben bewegt. Die im Zylinder 12 befindliche Luft wird durch das Rückschlagventil 10 aus dem Kraftstofffilter 1 hinausgedrückt. Das Rückschlagventil 10 verhindert beim Hinunterdrücken des Kolbentellers 15 dass Luft zurück strömen kann. Nach Abschluss des Pumpvorgangs, also wenn der Kraftstofffilter 1 wieder mit Kraftstoff gefüllt ist, wird das Handrad 17 wieder eingerastet und der Kolbenteller 15 unterhalb der Öffnung 16 des Zylinders 12 positioniert.

In Fig. 4 ist der Kolbenteller 15 aus den Figuren 1 bis 3 im Detail dargestellt. Diese Art der Pumpe 8 ist für das vorliegende Beispiel vorteilhaft. Es kann je nach Anwendungsfall aber auch eine andere Art des Kolbentellers 15 ausgewählt werden, z. B. kann auch eine Dichtlippe 19 verwendet werden, die Luft in der einen Richtung vorbeilässt, so dass die Luft aus dem Filtergehäuse 2 abgepumpt werden kann und in der anderen Richtung sperrt.

Eine solche andere Art von Kolbenteller ist beispielsweise aus der DE 10 2004 026 893 B4 bekannt. Um diesen Kolbenteller einsetzen zu können, muss der Kolbenteller aus der DE 10 2004 026 893 B4 in seiner Funktionsrichtung umgedreht werden, damit die Pumpe als Zugpumpe funktioniert und im oben beschriebenen Anwendungsfall eingesetzt werden kann. Weitergehende Anpassungsmaßnahmen sind ebenfalls erforderlich, damit die platzsparende Bauweise verwirklich werden kann.

Generell ist es mit dem erfindungsgemäßen Kraftstofffilter 1 möglich, in der Aufnahme 7 des Filtergehäusedeckels 4 die Pumpe 8 zur Entlüftung des Kraftstofffilters 1 einzusetzen oder aber die Aufnahme 7, beispielsweise mittels eines Blindstopfens, zu verschließen, so dass der Aufnahme 7 aufweisende Filtergehäusedeckel 4 sowohl mit als auch ohne Pumpe 8 verwendet bzw. eingebaut werden kann. Dies sichert ein breites Einsatzspektrum des erfindungsgemäßen Kraftstofffilters 1.

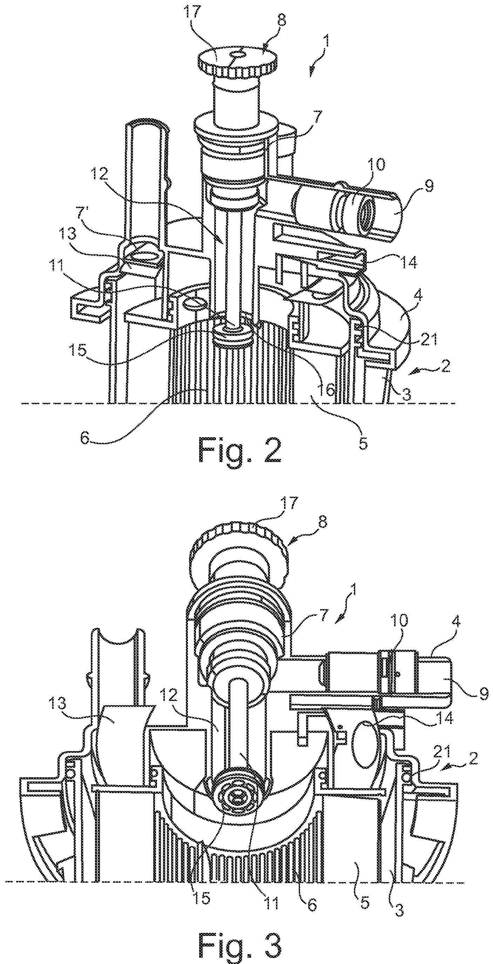

Der Filtergehäusetopf 3 und der Filtergehäusedeckel 4 können durch einen Bajonettverschluss wie Fig. 2 zu sehen oder durch ein nicht gezeigtes übliches Gewinde mit einander verbunden werden. Wichtig ist, dass die Verbindung der beiden Filtergehäuseteile 3,4 druckstabil ist. In beiden Fällen stellt die Verbindung eine Art Verschraubung dar. Durch eine druckstabile Dichtung 21, die sich in einer Nut am Außenumfang des Filtergehäusetopfes 3 befindet, werden der Filtergehäusetopf 3 und der Filtergehäusedeckel 4 gegeneinander abgedichtet.

## Patentansprüche

1. Kraftstofffilter (1) für einen Verbrennungsmotor eines Kraftfahrzeuges mit einem, zumindest ein Filterelement (5) aufnehmenden, Filtergehäuse (2), welches einen Filtergehäusetopf (3) und einen damit verschraubbaren arretierbaren Filtergehäusedeckel (4) aufweist, wobei im Filtergehäusedeckel (4) eine Aufnahme (7) vorgesehen ist, in welcher eine ziehend fördernde und mit einer Reinseite (6) des Kraftstofffilters (1) verbundene Pumpe (8) angeordnet ist, **dadurch gekennzeichnet,**
**dass** die Pumpe (8) als Hubkolbenpumpe ausgebildet ist und eine ringförmige und eine Einwegeventilfunktion erzeugende Dichtlippe (19) aufweist, und dass die Pumpe (8) einen Kolbenteller (15) mit mindestens einer Öffnung (20) und eine umlaufende Dichtung (18) aufweist, wobei der Kolbenteller (15) mit seiner mindestens einen Öffnung (20), der Dichtung (18) und mit der Dichtlippe (19) zusammen die Pumpwirkung erzielt, und dass die Dichtlippe (19) oben auf dem Kolbenteller (15) mit seiner mindestens einen Öffnung (20) aufliegt und am Kolbenteller (15) befestigt ist.

2. Kraftstofffilter nach Anspruch 1,
**dadurch gekennzeichnet,**
**dass** die Aufnahme (7) zentral am Filtergehäusedeckel (4) angeordnet ist.

3. Kraftstofffilter nach Anspruch 1 oder 2,
**dadurch gekennzeichnet,**
**dass** die Pumpe (8) manuell betätigbar ist.

4. Kraftstofffilter nach Anspruch 1 oder 2,
**dadurch gekennzeichnet,**
**dass** die Pumpe (8) elektrisch angetrieben ist.

5. Kraftstofffilter nach einem der Ansprüche 1 bis 4,
**dadurch gekennzeichnet,**
**dass** im Filtergehäusedeckel (4) eine Aufnahme (7') für eine Heizeinrichtung (13) und ein Drucksensor vorgesehen ist.

6. Kraftstofffilter nach einem der Ansprüche 1 bis 5,
**dadurch gekennzeichnet,**
**dass** die Pumpe (8) mittels einer Kolbenstange (11) und einem Handrad (17), das außerhalb des Filtergehäuses (2) angebracht ist, betätigt wird.

7. Kraftstofffilter nach Anspruch 6,
**dadurch gekennzeichnet,**
**dass** das Handrad (17) eine eingerastete Nichtgebrauchsstellung und eine entrastete Gebrauchsstellung aufweist.

## Claims

1. Fuel filter (1) for a combustion engine of a motor vehicle with a filter housing (2) accommodating at least one filter element (5), the filter housing comprising a filter housing pot (3) and a lockable filter housing cover (4) which can be screwed to the filter housing pot, wherein a retainer (7) is provided in the filter housing cover (4) in which a pulling conveying pump (8) is arranged which is connected to a clean side (6) of the fuel filter (1),
**characterised in**
**that** the pump (8) is formed as a piston pump and comprises a circular sealing lip (19) producing a one-way valve function, and the pump (8) comprises a piston plate (15) with at least one opening (20) and a circumferential sealing (18), wherein the piston plate (15) achieves the pumping effect with the at least one opening (20), the sealing (18) and the sealing lip (19), and the sealing lip (19) rests with the at least one opening (20) at the top of the piston plate (15) and is mounted on the piston plate (15).

2. Fuel filter according to claim 1,
**characterised in**
**that** the retainer (7) is arranged centrally on the filter housing cover (4).

3. Fuel filter according to claim 1 or 2,
**characterised in**
**that** the pump (8) can be operated manually.

4. Fuel filter according to claim 1 or 2,
**characterised in**
**that** the pump (8) is operated electrically.

5. Fuel filter according to any of claims 1 to 4,
**characterised in**
**that** a retainer (7') for a heating device (13) and a pressure sensor is provided in the filter housing cover (4).

6. Fuel filter according to any of claims 1 to 5,
**characterised in**
**that** the pump (8) is operated by means of a piston rod (11) and a hand wheel (17) arranged outside the filter housing (2).

7. Fuel filter according to claim 6,
**characterised in**
**that** the hand wheel (17) comprises a locked non-operating position and an unlocked operating position.

## Revendications

1. Filtre à carburant (1) pour un moteur à combustion interne d'un véhicule automobile, comprenant un boîtier de filtre (2) recevant au moins un élément de filtre (5), qui présente un pot de boîtier de filtre (3) et un couvercle de boîtier de filtre (4) pouvant être bloqué et vissé au pot de boîtier de filtre, dans lequel est prévu, dans le couvercle de boîtier de filtre (4), un logement (7), dans lequel est disposée une pompe (8) de refoulement par tirage et reliée à un côté produit pur (6) du filtre à carburant (1), **caractérisé en ce**
**que** la pompe (8) est réalisée sous la forme d'une pompe à piston alternatif et présente une lèvre d'étanchéité (19) de forme circulaire et produisant une fonction de soupape unidirectionnelle, et
**que** la pompe (8) présente un disque de piston (15) avec au moins une ouverture (20) et un joint d'étanchéité (18) périphérique, dans lequel le disque de piston (15) conjointement avec son au moins une ouverture (20), le joint d'étanchéité (18) et avec la lèvre d'étanchéité (19) atteint l'action de pompage, et que la lèvre d'étanchéité (19) repose en haut sur le disque de piston (15) avec son au moins une ouverture (20) et est fixée au niveau du disque de piston (15).

2. Filtre à carburant selon la revendication 1,
**caractérisé en ce**
**que** le logement (7) est disposé de manière centrale au niveau du couvercle de boîtier de filtre (4).

3. Filtre à carburant selon la revendication 1 ou 2,
**caractérisé en ce**
**que** la pompe (8) peut être actionnée manuellement.

4. Filtre à carburant selon la revendication 1 ou 2,
**caractérisé en ce**
**que** la pompe (8) est entraînée de manière électrique.

5. Filtre à carburant selon l'une quelconque des revendications 1 à 4,
**caractérisé en ce**
**qu'**un logement (7') pour un dispositif de chauffage (13) et un capteur de pression est prévu dans le couvercle de boîtier de filtre (4).

6. Filtre à carburant selon l'une quelconque des revendications 1 à 5,
**caractérisé en ce**
**que** la pompe (8) est actionnée au moyen d'une tige de piston (11) et d'une molette (17), qui est installée à l'extérieur du boîtier de filtre (2).

7. Filtre à carburant selon la revendication 6,
**caractérisé en ce**
**que** la molette (17) présente une position de non-utilisation enclenchée et une position d'utilisation désenclenchée.
